# EUROPÄISCHE PATENTSCHRIFT

(11) **EP 1 198 436 B1**
(45) Veröffentlichungstag und Bekanntmachung des Hinweises auf die Patenterteilung: **27.08.2003**
(21) Anmeldenummer: 00943613.0
(22) Anmeldetag: 19.05.2000
(51) Int. Cl.: C04B 35/486, C04B 35/622, C04B 35/632, C04B 35/634

(54) **VERFAHREN ZUR HERSTELLUNG KERAMISCHER GRÜNKÖRPER**
METHOD FOR PRODUCING CERAMIC GREEN BODIES
PROCEDE POUR FABRIQUER DES CORPS VERTS CERAMIQUES

(30) Priorität: 26.05.1999 DE 19924134
(43) Veröffentlichungstag der Anmeldung: 24.04.2002
(73) Patentinhaber: ROBERT BOSCH GMBH, 70442 Stuttgart (DE)
(72) Erfinder: LINDEMANN, Gert, D-72805 Lichtenstein (DE); KOENGETER, Imke, D-70199 Stuttgart (DE); PETERS, Doris, D-70193 Stuttgart (DE); WUEHRL, Ingrid, D-70839 Gerlingen (DE); EISELE, Ulrich, D-70199 Stuttgart (DE)
(86) Internationale Anmeldenummer: DE0001588
(87) Internationale Veröffentlichungsnummer: WO00073239

(56) Entgegenhaltungen:
- EP-A- 0 441 219
- US-A- 5 155 158

## Beschreibung

Die Erfindung betrifft Verfahren zur Herstellung keramischer Grünfolien.

### Stand der Technik

Es ist bekannt, bei der Herstellung keramischer Foiliensubstrate aus ZrO₂ den Folienguß einzusetzen. Dazu wird zunächst ein keramisches ZrO₂-Pulver mit organischen Komponenten wie einem Binder, Weichmacher und einem Lösungsmittel zu einer gießfähigen Suspension aufbereitet. Das Vergießen dieser Suspension zu einer Folie erfolgt dann in einem engen Viskositätsbereich, um eine gleichbleibende Substratdicke und -qualität zu gewährleisten. Ein derartiges Verfahren ist beispielsweise aus EP 0 441 219 bekannt.

Zur Trocknung d.h. zum Abziehen des Lösungsmittels aus der keramischen Grünfolie passiert die gegossene Grünfolie im weiteren dann einen langen Trocknungskanal, der mit einem geschlossenen Abluftsystem versehen und gegen Explosionsgefahr geschützt ist, bevor diese schließlich beispielsweise einzelnen Druckschritten zum Aufbau eines Sensors zugeführt wird. Das Trocknen der Grünfolie nach dem Gießen dient im wesentlichen der Minimierung von Schrumpfungen bei nachfolgenden Verfahrensschritten und dem zumindest teilweisen Abziehen des Lösungsmittels.

Weiter ist mit bekannten Grünfolien in der Regel auch nach jedem Druckschritt zum Aufbau eines Sensors eine zusätzliche Trocknung der zuvor bedruckten Grünfolie erforderlich. In der Praxis hat sich dabei gezeigt, daß ein unvermeidbares, jedoch unerwünschtes Nachschrumpfen der Grünfolien während dieser Zwischentrocknungen in erheblicher Weise von den gewählten Trocknungsbedingungen abhängig ist.

Die unerwünschten Nachschrumpfungen beruhen im wesentlichen auf vorhandenen Resten von Lösungsmitteln oder sonstigen organischen Bestandteilen in der Grünfolie, die bei Temperaturen oberhalb von ca. 60°C zumindest teilweise flüchtig sind oder sich teilweise zersetzen.

Damit sind bekannte keramische Grünfolien nach dem Trocknen ohne zusätzliche und aufwendige Aufbereitungsschritte auch nicht mehr unmittelbar recyclingfähig, da beispielsweise ein Teil des verwendeten organischen Weichmachers beim Trocknen ausgetrieben worden ist.

### Vorteile der Erfindung

Die erfindungsgemäßen Verfahren zur Herstellung keramischer Grünfolien mit den kennzeichnenden Merkmalen der unabhängigen Ansprüche 1 und 6 haben gegenüber dem Stand der Technik den Vorteil, daß keinerlei Lösungsmittel eingesetzt wird.

Damit zeigen die erfindungsgemäß hergestellten Grünfolien sehr vorteilhaft beispielsweise kein oder ein vernachlässigbar geringes Nachschrumpfen, insbesondere bei Trocknungsschritten zwischen einzelnen Druckschritten, so daß die im Stand der Technik bestehende Problematik der Nachschrumpfung gegossener Grünkörper überwunden wird. Somit wird der Herstellungsprozeß keramischer Grünfolien hinsichtlich Qualitätskonstanz deutlich verbessert.

Weiter unterliegen die erfindungsgemäß hergestellten keramischen Grünfolien oder nach dem Extrudieren beispielsweise keinen Schwindungs- oder Deformationskräften, die bei der Trocknung gießfähiger Suspensionen unvermeidlich sind. Daher ist ihre Formstabilität über Länge und Breite stets gewährleistet.

Daneben wird die Oberflächenstruktur der mit dem erfindungsgemäßen Verfahren hergestellten keramischen Grünfolien im wesentlichen durch die Form der Düse des Extruders bestimmt. Typische Trocknungsfehler bei gegossener Folie wie Hautbildung oder Blasen treten damit nicht auf.

Dadurch, daß im erfindungsgemäßen Verfahren keinerlei Lösungsmittel eingesetzt werden, kann weiterhin sehr vorteilhaft auch ein zeit- und energieaufwendiger Trocknungsschritt nach dem im Stand der Technik bekannten Gießen der Grünfolie oder des Grünkörpers entfallen. Gleichzeitig kann damit auf teure, explosionsgeschützte Anlagenteile und Einrichtungen zur Rückgewinnung von Lösungsmitteln verzichtet werden. Somit entstehen erhebliche Vorteile hinsichtlich der Kosten für die Herstellungsanlagen der Folien und deren Komplexität.

Schließlich ist die erfindungsgemäße keramische Grünfolie vorteilhaft ausreichend flexibel für den Druckprozeß.

Vorteilhafte Weiterbildungen der Erfindung ergeben sich aus den in den Unteransprüchen genannten Maßnahmen.

So ist sehr vorteilhaft, während des Herstellungsverfahrens den Grünfolien einen Dispergator zuzusetzen, so daß das hochviskose Ausgangsmaterial stets ohne zusätzliche Aufbereitungsschritte voll recyclingfähig bleibt. Damit können sehr vorteilhaft aufgrund der während und/oder nach der Herstellung der keramischen Grünfolien stets unveränderten Zusammensetzung beispielsweise nach einem Knet- oder Extrusionsprozeß anfallende Reste, insbesondere Folienreste, nach entsprechender Zerkleinerung dem hochviskosen Ausgangsmaterial wieder zugeführt und zusammen mit diesem aufbereitet werden können. Damit werden insgesamt Rohstoffe eingespart und Abfälle vermieden.

Weiter ist vorteilhaft, wenn der Extruder beheizt wird, so daß die Viskosität des hochviskosen Ausgangsmaterials bei der Formgebung der keramischen Grünfolie reduziert und gezielt eingestellt werden kann. Dazu ist es sehr vorteilhaft, daß sich das eingesetzte hochviskose Ausgangsmaterial wie ein Thermoplast verhält.

Im übrigen ist vorteilhaft, wenn die keramischen Grünfolien nach dem Verlassen des Extruders mit einer geeigneten Abzugsvorrichtung aufgenommen und dabei gekühlt wird. Damit kann beispielsweise die erzeugte keramische Grünfolie sofort weiteren Bearbeitungsschritten, beispielsweise einem Druckprozeß in der Sensorfertigung, zugeführt werden.

Zur Kontrolle der Dicke der erzeugten Grünfolie ist es weiter vorteilhaft, wenn der eingesetzte Kalander mit einer integrierten Vorrichtung zur Messung der Dicke der Grünfolie versehen wird, die, besonders vorteilhaft, über eine Regelungseinrichtung mit dem Extruder verbunden ist und damit stets eine weitgehend konstante, voreingestellte Foliendicke gewährleistet.

### Ausführungsbeispiele

In einem ersten Ausführungsbeispiel wird zunächst als keramische Pulverkomponente und Hauptbestandteil einer zu erzeugenden keramischen Grünfolie 80 Gew.% bis 90 Gew.% ZrO₂-Pulver mit einer typische Korngröße von 0,1 µm bis 1 µm zusammen mit 0,5 Gew.% bis 3 Gew.% eines Sinteradditivs, 5 Gew.% bis 10 Gew.% des organischen Binders Polyvinylbutyral und 1 Gew.% bis 7 Gew.% des organischen Weichmachers Dibutylsebacat als Nebenbestandteile eingesetzt. Als Sinteradditiv eignet sich besonders eine Mischung aus SiO₂ und Al₂O₃ oder verwandte, an sich bekannte, Silizium und Aluminium enthaltende Materialien. Anstelle von ZrO₂-Pulver eignet sich gleichermaßen auch in bekannter Weise mit Yttrium stabilisiertes ZrO₂-Pulver oder Al₂O₃-Pulver.

Bevorzugt wird 86,3 Gew.% yttriumstabilisiertes ZrO₂-Pulver mit 1,5 Gew.% eines Sinteradditives aus SiO₂ und Al₂O₃, 7 Gew.% Polyvinylbutyral und 5,2 Gew.% Dibutylsebacat verwendet. Diese Materialien werden zunächst einem kontinuierlich arbeitenden Knetaggregat zugeführt und darin zu einem hochviskosen Ausgangsmaterial verarbeitet. Unter einem hochviskosen Ausgangsmaterial wird dabei in der Anmeldung ein Material mit einer bei 150°C bei Formgebungsverfahren für Thermoplasten typischen und üblichen Viskosität verstanden. Konkret liegt die Viskosität des Ausgangsmaterials bevorzugt, abhängig von der Scherrate, bei ca. 2000 Pa s⁻¹ bei einer Scherrate von ca. 100 s⁻¹ bis ca. 20000 Pa s⁻¹ bei einer Scherrate von 10 s⁻¹.

Nachdem aus diesem hochviskosen keramischen Ausgangsmaterial dann mittels Strangranulierung in an sich bekannter Weise Granalien mit enger Größenverteilung worden sind, folgt eine Extrusion. Typische Werte für die Granaliengröße liegen bei einem Durchmesser von ca. 5 mm bei einer Länge von 2 mm bis 3 mm.

Das hochviskose Ausgangsmaterial, das der Extrusion zugeführt wird, ist somit lösungsmittelfrei und verhält sich bei Erwärmung wie ein Thermoplast.

Zur Extrusion des Ausgangsmaterials wird beispielsweise ein Extruder mit einer 3-Zonen Schnecke eingesetzt, die einen Kompressionsbereich, einen Scherbereich und einen Mischbereich an der Schneckenspitze aufweist. Dieser Extruder wird auf eine Temperatur von 130° C bis 150° C aufgeheizt, um die Viskosität des keramischen Ausgangsmaterials zu senken. Dazu ist es erforderlich, daß die organischen Komponenten des keramischen Ausgangsmaterials bis mindestens 130°C, bevorzugt bis mindestens 150°C temperaturbeständig sind, d.h. sie sind bis zu dieser Temperatur nicht flüchtig und zersetzen sich nicht. Im übrigen verhält sich das hochviskose Ausgangsmaterial bei Erwärmung thermoplastisch.

Der Extruder weist ferner zur Herstellung einer keramischen Grünfolie eine Breitschlitzdüse mit fischschwanzähnlichem oder kleiderbügelähnlichem Masseverteilungskanal auf. Die Düse besitzt zudem eine Flexlippe, die eine genaue Einstellung der Dicke der den Extruder verlassenden keramischen Grünfolie erlaubt. Die Breitschlitzdüse mit der Flexlippe wird bevorzugt auf 150°C bis 170°C beheizt.

Die die Breitschlitzdüse des Extruders verlassende keramische Grünfolie wird dann weiter mit einem Kalander abgezogen und dabei auf eine Temperatur von 150°C bis Raumtemperatur abgekühlt, wobei der beim Abziehen auftretende Reckgrad möglichst gering gewählt ist.

Nach dem Abkühlen und Schneiden der derart hergestellten keramischen Grünfolie kann diese dann in an sich bekannter Weise bei der Sensorfertigung eingesetzt und in einzelnen Druckschritten, die beispielsweise jeweils von Trocknungschritten gefolgt sind, bedruckt werden.

Ein zweites Ausführungsbeispiel der Erfindung sieht in Abwandlung des ersten Ausführungsbeispiels vor, daß 86,0 Gew.% yttriumstabilisiertes ZrO₂-Pulver mit 1,4 Gew.% eines Sinteradditivs aus SiO₂ und Al₂O₃, 8,7 Gew.% Polyvinylbutyral, 2,5 Gew.% Dibutylsebacat und zusätzlich 1,4 Gew.% eines Dispergators eingesetzt werden. Der Dispergator ist beispielsweise ein üblicher oligomerer Polyester. Die genannten Ausgangsstoffe werden zunächst erneut einem kontinuierlich arbeitenden Knetaggregat zugeführt, um daraus ein hochviskoses keramisches Ausgangsmaterial zu präparieren. Dieses keramische Ausgangsmaterial wird dann völlig analog zu dem ersten Ausführungsbeispiel mittels Strangranulierung zu Granalien weiterverarbeitet und mit dem zuvor beschriebenen Extruder extrudiert.

Dazu wird die die Breitschlitzdüse des Extruders schließlich verlassende keramische Grünfolie erneut mit einem Kalander abgezogen und auf eine Temperatur von 150°C bis Raumtemperatur gekühlt, wobei der Reckgrad möglichst gering gewählt ist.

Nach dem Abkühlen und Schneiden der derart hergestellten keramischen Grünfolie erfolgt direkt die Weiterverarbeitung durch Bedrucken. Ein vorangehendes Trocknen der keramischen Grünfolie oder ein Abziehen eines Lösungsmittels ist nicht erforderlich.

Im übrigen ist in den Kalander zur Kontrolle der Dicke der erzeugten, abgezogenen Grünfolie eine an sich bekannte Vorrichtung zur kontinuierlichen Foliendickenmessung integriert. Diese Vorrichtung zur Foliendickenmessung ist weiter bevorzugt über eine Regelungseinrichtung mit dem Extruder verbunden, so daß über diese Regelung stets eine weitgehend konstante, voreingestellte Foliendicke der Grünfolie gewährleistet werden kann.

## Patentansprüche

1. Verfahren zur Herstellung einer keramischen Grünfolie, mit einer keramischen Pulverkomponente als Hauptbestandteil und mindestens einer organischen, lösungsmittelfreien, einen organischen Binder aufweisenden Komponente als Nebenbestandteil, wobei die organische Komponente mit der keramischen Pulverkomponente zu einem hochviskosen Ausgangsmaterial verarbeitet und mit einem Extruder zu einer Grünfolie geformt wird, **dadurch gekennzeichnet, dass** als organischer Binder Polyvinylbutyral eingesetzt wird.

2. Verfahren nach Anspruch 1, **dadurch gekennzeichnet, dass** als hochviskoses Ausgangsmaterial ein thermoplastisches, lösungsmittelfreies Ausgangsmaterial eingesetzt wird.

3. Verfahren nach Anspruch 1, **dadurch gekennzeichnet, dass** eine organische Komponente mit einem organischen Weichmacher eingesetzt wird.

4. Verfahren nach Anspruch 1, **dadurch gekennzeichnet, dass** dem hochviskosen Ausgangsmaterial ein Sinteradditiv und/oder ein Dispergator zugesetzt wird.

5. Verfahren nach Anspruch 3, **dadurch gekennzeichnet, dass** als keramische Pulverkomponente ZrO₂-Pulver oder yttriumstabilisiertes ZrO₂-Pulver und Dibutylsebacat als organischer Weichmacher eingesetzt werden.

6. Verfahren zur Herstellung einer keramischen Grünfolie, insbesondere nach einem der vorangehenden Ansprüche, mit einer keramischen Pulverkomponente als Hauptbestandteil und mindestens einer organischen, lösungsmittelfreien Komponente als Nebenbestandteil, wobei die keramische Pulverkomponente und die organische, lösungsmittelfreie Komponente zu einem hochviskosen Ausgangsmaterial verarbeitet und mit einem Extruder zu der Grünfolie geformt werden, **dadurch gekennzeichnet, dass** ein Extruder mit einer 3-Zonen-Schnecke mit einem Kompressionsbereich, einem Scherteil und einem Mischteil eingesetzt wird, dessen Ausgang einen fischschwanzähnlichen oder kleiderbügelähnlichen Masseverteilungkanal aufweist.

7. Verfahren nach Anspruch 6, **dadurch gekennzeichnet, dass** die Verarbeitung der keramischen Pulverkomponente und der organischen Komponenten zu dem hochviskosen Ausgangsmaterial in einem Knetaggregat erfolgt.

8. Verfahren nach Anspruch 6, **dadurch gekennzeichnet, dass** das hochviskose Ausgangsmaterial vor der Extrusion zu Granalien verarbeitet wird.

9. Verfahren nach Anspruch 6, **dadurch gekennzeichnet, dass** der Extruder beheizt und insbesondere auf Temperaturen von 130°C bis 150°C aufgeheizt wird.

10. Verfahren nach Anspruch 6, **dadurch gekennzeichnet, dass** der Ausgang des Extruders mit einer insbesondere beheizten Lippe zur Einstellung der Dicke der keramischen Grünfolie versehen wird.

11. Verfahren nach Anspruch 6, **dadurch gekennzeichnet, dass** die den Extruder verlassende keramische Grünfolie mit einem Kalander abgezogen wird.

12. Verfahren nach Anspruch 11, **dadurch gekennzeichnet, dass** in dem Kalander eine Messung der Dicke der erzeugten Grünfolie vorgenommen wird.

## Claims

1. Method for producing a ceramic green sheet, with a ceramic powder component as the main constituent and at least one organic, solvent-free component with an organic binder as the secondary constituent, the organic component being processed with the ceramic powder component into a highly viscous starting material and formed into a green sheet by an extruder, **characterized in that** polyvinyl butyral is used as the organic binder.

2. Method according to Claim 1, **characterized in that** a thermoplastic, solvent-free starting material is used as the highly viscous starting material.

3. Method according to Claim 1, **characterized in that** an organic component with an organic plasticizer is used.

4. Method according to Claim 1, **characterized in that** a sintering additive and/or a dispersing agent is added to the highly viscous starting material.

5. Method according to Claim 3, **characterized in that** ZrO₂ powder or yttrium-stabilized ZrO₂ powder are used as the ceramic powder component and dibutyl sebacate is used as the organic plasticizer.

6. Method for producing a ceramic green sheet, in particular according to one of the preceding claims, with a ceramic powder component as the main constituent and at least one organic, solvent-free component as the secondary constituent, the ceramic powder component and the organic, solvent-free component being processed into a highly viscous starting material and formed into the green sheet by an extruder, **characterized in that** an extruder with a 3-zone screw with a compression section, a shearing section and a mixing section is used, the output of which has a fishtail-like or coathanger-like manifold.

7. Method according to Claim 6, **characterized in that** the processing of the ceramic powder component and the organic components into the highly viscous starting material takes place in a kneading unit.

8. Method according to Claim 6, **characterized in that** the highly viscous starting material is processed into granules before the extrusion.

9. Method according to Claim 6, **characterized in that** the extruder is heated and, in particular, is heated up to temperatures from 130°C to 150°C.

10. Method according to Claim 6, **characterized in that** the output of the extruder is provided with a lip, in particular a heated lip, for setting the thickness of the ceramic green sheet.

11. Method according to Claim 6, **characterized in that** the ceramic green sheet leaving the extruder is drawn off by a calender.

12. Method according to Claim 11, **characterized in that** a measurement of the thickness of the green sheet produced is performed in the calender.

## Revendications

1. Procédé de production d'une feuille crue (ébauche) de céramique, avec comme constituant principal un composant pulvérulent céramique, et comme constituant secondaire au moins un composant organique, sans solvant, présentant un liant organique, le composant organique étant transformé avec le composant pulvérulent céramique en un produit de départ hautement visqueux pour être formé à l'aide d'une extrudeuse en une feuille d'ébauche,
**caractérisé en ce qu'**
on utilise comme liant organique le polyvinylbutyral.

2. Procédé selon la revendication 1,
**caractérisé en ce qu'**
on utilise comme produit de départ hautement visqueux un produit de départ thermoplastique sans solvant.

3. Procédé selon la revendication 1,
**caractérisé en ce qu'**
on utilise un composant organique avec un plastifiant organique.

4. Procédé selon la revendication 1,
**caractérisé en ce qu'**
on ajoute au produit de départ hautement visqueux un additif de frittage et/ou un dispersant.

5. Procédé selon la revendication 3,
**caractérisé en ce qu'**
on utilise comme composant pulvérulent céramique une poudre de ZrO₂ ou une poudre de ZrO₂ stabilisée avec de l'yttrium, et comme plastifiant organique du sébacate de dibutyle.

6. Procédé de production d'une ébauche de céramique, en particulier selon l'une des revendications précédentes, avec comme constituant principal un composant pulvérulent céramique, et comme constituant secondaire au moins un composant organique sans solvant, le composant pulvérulent céramique et le composant organique sans solvant étant transformés en un produit de départ hautement visqueux et formés à l'aide d'une extrudeuse pour obtenir l'ébauche,
**caractérisé en ce qu'**
on utilise une extrudeuse avec une vis à 3 zones dont un domaine de compression, une partie cisaillement et une partie mélange, et dont la sortie présente un canal de répartition des masses semblable à une queue de poisson ou un cintre pour vêtement.

7. Procédé selon la revendication 6,
**caractérisé en ce que**
le traitement du composant pulvérulent céramique et des composants organiques pour donner le produit de départ hautement visqueux s'effectue dans un appareil de pétrissage.

8. Procédé selon la revendication 6,
**caractérisé en ce qu'**
on transforme le produit de départ hautement visqueux, avant l'extrusion, en granulés.

9. Procédé selon la revendication 6,
**caractérisé en ce qu'**
on chauffe l'extrudeuse et en particulier à des températures allant de 130°C à 150°C.

10. Procédé selon la revendication 6,
**caractérisé en ce que**
la sortie de l'extrudeuse est munie d'une lèvre en particulier chauffée pour le réglage de l'épaisseur de l'ébauche de céramique.

11. Procédé selon la revendication 6,
**caractérisé en ce qu'**
on tire l'ébauche de céramique quittant l'extrudeuse avec une calandre.

12. Procédé selon la revendication 11,
**caractérisé en ce qu'**
on procède dans la calandre à une mesure de l'épaisseur de l'ébauche produite.
